# DEMANDE DE BREVET EUROPEEN

(11) **EP 1 511 142 A1**
(43) Date de publication de la demande: **02.03.2005**
(21) Numéro de dépôt: 04356147.1
(22) Date de dépôt: 24.08.2004
(51) Int. Cl.: H02G 3/06

(54) **Goulotte et éclisse pour chemin pour cables, chemin pour cables et procédé de fabrication d'une telle goulotte**

(30) Priorité: 25.08.2003 FR 0310139
(71) Demandeur: Gewiss France SA, 21430 Liernais (FR)
(72) Inventeur: Lebrat, Jean-Pascal, 71640 Givry (FR); Garnier, André, 58230 Montsauche Les Settons (FR)
(74) Mandataire: Myon, Gérard

(57) **Abrégé**

Une goulotte (1) pour chemin pour câbles comprend des fils longitudinaux (4, 5, 6, 7, 8) et transversaux (2) soudés en un treillis qui définit un fond de la goulotte, ainsi que des premier et deuxième côtés montant à partir de ce fond.

Cette goulotte (1) est pourvue d'au moins une patte latérale (3a, 3b) d'assemblage en treillis de fils métalliques soudés ensemble (4a, 6a, 7a). Cette patte d'assemblage (3a, 3b) dépasse d'une extrémité de la goulotte (1) pour pouvoir être solidarisée à une autre goulotte (1').

## Description

La présente invention se rapporte au domaine des chemins de câbles ou analogues constitués d'une succession de goulottes du type en treillis de fils métalliques soudés ensemble. Plus précisément, elle concerne une telle goulotte, une éclisse d'assemblage de deux goulottes de ce type mises bout à bout et un chemin pour câbles. Elle concerne également un procédé de fabrication d'une goulotte en treillis de fils métalliques soudés ensemble.

Dans la demande de brevet français N° 2 687 207, il est décrit une éclisse d'assemblage de deux goulottes mise bout à bout, dont chacune est constitué d'un treillis de fils transversaux et longitudinaux soudés ensemble. Cette éclisse, résultant de la mise en forme d'un flan métallique, définit quatre pattes de clipage, disposées le long d'une direction axiale, ainsi que deux rebords, dont chacun est recourbé de manière à délimiter l'une de deux gorges dans le prolongement l'une de l'autre.

Le montage de cette éclisse commence par l'accrochage simultané d'un rebord recourbé à un fil longitudinal d'un fond d'une des goulottes et de l'autre rebord recourbé à un fil longitudinal d'un fond de l'autre goulotte. Ensuite, tout en maintenant les rebords accrochés, on bascule l'éclisse vers le haut jusqu'à ce que les pattes de clipage se clipent sur des fils longitudinaux de côtés que possèdent les goulottes. Cette éclisse ne peut être installée qu'après les deux goulottes, de sorte qu'elle ne peut pas être pré-montée sur l'une de ces goulottes.

Un chemin de câble est généralement supporté soit par des équerres, soit par des consoles qui peuvent être fixées directement au mur ou montées sur des barres verticales, ce qui permet de faire cheminer plusieurs chemins les uns au-dessus des autres.

Il ressort de ce qui précède que les pièces nécessaires à l'installation d'un chemin de câbles sur un site ou dans un bâtiment sont nombreuses.

L'invention a pour but de simplifier le stockage et le transport de ces pièces.

A cet effet, l'invention a pour objet une goulotte pour chemin pour câbles ou analogues, cette goulotte comprenant des fils longitudinaux et transversaux métalliques soudés en un treillis qui définit un fond de la goulotte, ainsi que des premier et deuxième côtés montant à partir de ce fond, caractérisée en ce qu'elle est pourvue d'au moins une patte latérale d'assemblage en treillis de fils métalliques soudés ensemble, cette patte d'assemblage dépassant d'une extrémité de la goulotte pour pouvoir être solidarisée à une autre goulotte.

Selon d'autres caractéristiques avantageuses de cette goulotte :
- des portions d'extrémité de certains des fils longitudinaux de la goulotte font partie de la patte latérale d'assemblage ;
- la patte latérale d'assemblage est rapportée ;
- la patte latérale d'assemblage fait partie d'une éclisse latérale montée sur la goulotte ;
- la patte d'assemblage comprend au moins deux doigts inférieur et supérieur d'accrochage de la patte à l'autre goulotte ;
- le doigt inférieur d'accrochage et le doigt supérieur d'accrochage sont respectivement fixés à un premier et un deuxième fil longitudinaux parmi les fils du treillis de la patte d'assemblage, au moins un fil transversal parmi les fils du treillis de la patte d'assemblage reliant le premier fil longitudinal au deuxième fil longitudinal et comprenant au moins un tronçon courbe entre ces premier et deuxième fils longitudinaux ;
- l'un au moins des doigts inférieur et supérieur d'accrochage est une portion d'extrémité du fil transversal du treillis de la patte ;
- le premier et le deuxième fil longitudinaux comprennent respectivement une première et une deuxième portion d'extrémité parmi lesdites portions d'extrémité de la patte d'assemblage, ledit premier fil longitudinal comprenant une portion qui fait partie du fond de la goulotte, qui s'étend selon un premier axe sensiblement parallèle aux côtés de la goulotte et qu'un premier tronçon de la première portion d'extrémité relie à un deuxième tronçon de cette première portion d'extrémité, ce deuxième tronçon de la première portion d'extrémité étant décalé du premier axe parallèlement au fond de la goulotte et étant sensiblement parallèle à ce premier axe, ledit deuxième fil longitudinal comprenant une portion qui fait partie du premier côté de la goulotte, qui s'étend selon un deuxième axe sensiblement parallèle au fond de la goulotte et qu'un premier tronçon de la deuxième portion d'extrémité relie à un deuxième tronçon de cette deuxième portion d'extrémité, ce deuxième tronçon de la deuxième portion d'extrémité étant décalé du deuxième axe parallèlement au premier côté de la goulotte et étant sensiblement parallèle à ce deuxième axe ;
- la patte d'assemblage comporte un rebord inférieur de support de l'autre goulotte.

En outre, l'invention a pour objet une éclisse latérale destinée à équiper une goulotte telle que définie ci-dessus, caractérisée en ce qu'elle comprend un treillis de fils métalliques soudés ensemble, au moins deux premiers. doigts inférieur et supérieur d'accrochage de l'éclisse à une première goulotte, ainsi qu'au moins deux deuxièmes doigts inférieur et supérieur d'accrochage de l'éclisse à une deuxième goulotte, les premier et deuxième doigts inférieurs d'accrochage étant fixés à l'écart l'un de l'autre à un premier fil longitudinal parmi les fils du treillis de l'éclisse, les premier et deuxième doigts supérieurs d'accrochage étant fixés à l'écart l'un de l'autre à un deuxième fil longitudinal parmi les fils du treillis de l'éclisse, alors que certains fils transversaux parmi les fils du treillis de l'éclisse relient le premier fil longitudinal au deuxième fil longitudinal et comprennent au moins un tronçon courbe entre ces premier et deuxième fils longitudinaux.

Selon d'autres caractéristiques avantageuses de cette éclisse :
- l'un au moins des premier et deuxième doigts inférieurs et supérieurs d'accrochage est une portion d'extrémité d'un des fils transversaux du treillis de l'éclisse ;
- les premier et deuxième doigts inférieurs sont recourbés et forment des crochets entourant partiellement le premier fil longitudinal du treillis de l'éclisse.

L'invention a également pour objet un chemin pour câbles ou analogues, comprenant une première goulotte comportant des fils longitudinaux et transversaux métalliques soudés en un treillis qui définit un fond de cette première goulotte, ainsi que deux côtés montant à partir de ce fond, un premier et un deuxième fil longitudinaux parmi les fils longitudinaux de la première goulotte faisant respectivement partie du fond de cette première goulotte et d'un côté de ladite première goulotte, caractérisé en ce qu'il comprend une deuxième goulotte telle que définie ci-dessus, le doigt inférieur et le doigt supérieur étant respectivement accrochés au premier et au deuxième fil longitudinaux de la première goulotte.

Selon d'autres caractéristiques avantageuses de ce chemin pour câbles, le premier fil longitudinal de la patte d'assemblage et le premier fil longitudinal de la première goulotte sont d'un même côté d'un premier fil transversal parmi les fils transversaux de la première goulotte, le doigt inférieur d'accrochage et le premier fil transversal de la première goulotte étant d'un même côté du premier fil longitudinal de la première goulotte, le deuxième fil longitudinal de la patte d'assemblage et le deuxième fil longitudinal de la première goulotte étant d'un même côté du premier fil transversal de la première goulotte, le doigt supérieur d'accrochage et le premier fil transversal de la première goulotte étant d'un même côté du deuxième fil longitudinal de la première goulotte.

De plus, l'invention a pour objet un procédé de fabrication d'une goulotte telle que définie ci-dessus, caractérisé en ce qu'il comporte des étapes dans lesquelles :
a) au moins à une extrémité d'une goulotte initiale comprenant des fils longitudinaux et transversaux soudés en un treillis qui définit un fond de la goulotte initiale, ainsi que deux côtés montant à partir de ce fond, on découpe et on retire une portion du treillis de cette goulotte initiale de telle manière qu'au moins une portion latérale attenante à la portion que l'on retire demeure associée au reste de la goulotte initiale, puis
b) on réalise ladite patte latérale d'assemblage à partir de la portion latérale qui était attenante à la portion retirée dans l'étape a).

L'invention sera bien comprise à la lecture de la description qui va suivre, donnée uniquement à titre d'exemple et faite en se référant aux dessins annexés, sur lesquels :
- la figure 1 est une vue éclatée, en perspective, d'une portion d'un chemin de câbles selon un premier mode de réalisation de l'invention,
- la figure 2 est une vue en perspective du chemin de câbles représenté à la figure 1, en configuration assemblée,
- la figure 3 est une vue latérale d'une portion d'une goulotte conforme à l'invention et faisant partie du chemin représenté aux figure 1 et 2,
- la figure 4 est une vue partielle, de dessus, de la goulotte partiellement représentée à la figure 3,
- la figure 5 est une coupe selon le plan V de la figure 2 et ne représente qu'une portion latérale du chemin de cette figure 2,
- les figures 6 à 8 sont des vues en perspective illustrant des étapes successives de l'assemblage de la portion de chemin de câbles partiellement représentée aux figures 1, 2 et 5,
- la figure 9 est une vue éclatée, en perspective, d'une portion d'un chemin de câbles selon un deuxième mode de réalisation de l'invention,
- la figure 10 est une vue en perspective d'une portion d'un chemin de câbles selon un troisième mode de réalisation de l'invention,
- la figure 11 est une vue en perspective d'une portion d'une goulotte conforme à l'invention et faisant partie du chemin de câbles de la figure 10,
- la figure 12 est une vue en perspective d'une éclisse, conforme à l'invention, qui équipe la goulotte partiellement représentée à la figure 11,
- la figure 13 représente la goulotte de la figure 11 vue par une extrémité et illustre une étape de l'installation de l'éclisse de la figure 12 sur cette goulotte,
- la figure 14 est une vue en perspective d'une éclisse selon un quatrième mode de réalisation de l'invention,
- la figure 15 est une vue en perspective d'une éclisse selon un cinquième mode de réalisation de l'invention, et
- la figure 16 est une coupe transversale d'un chemin de câbles en cours d'assemblage à l'aide de plusieurs exemplaires de l'éclisse représentée à la figure 15.

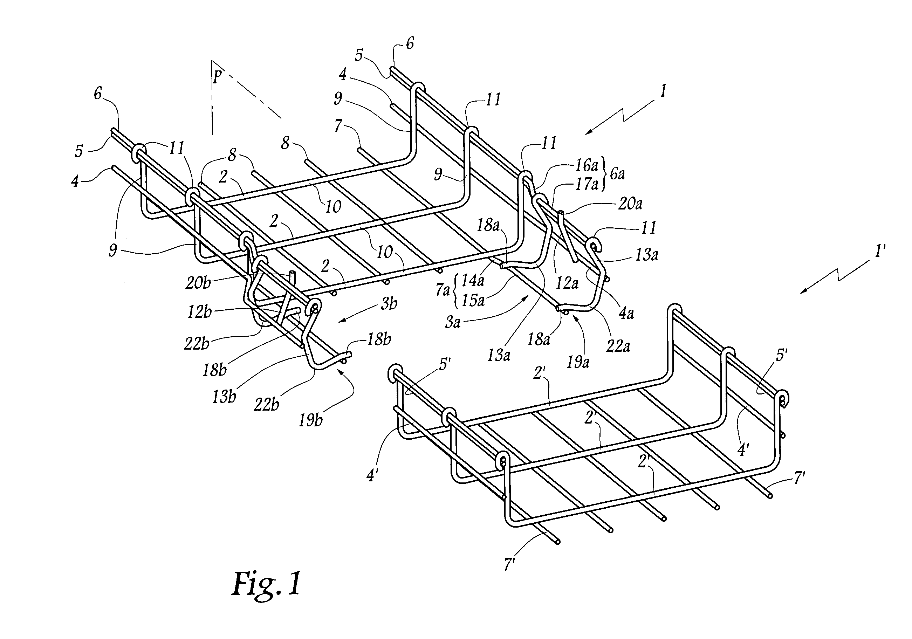

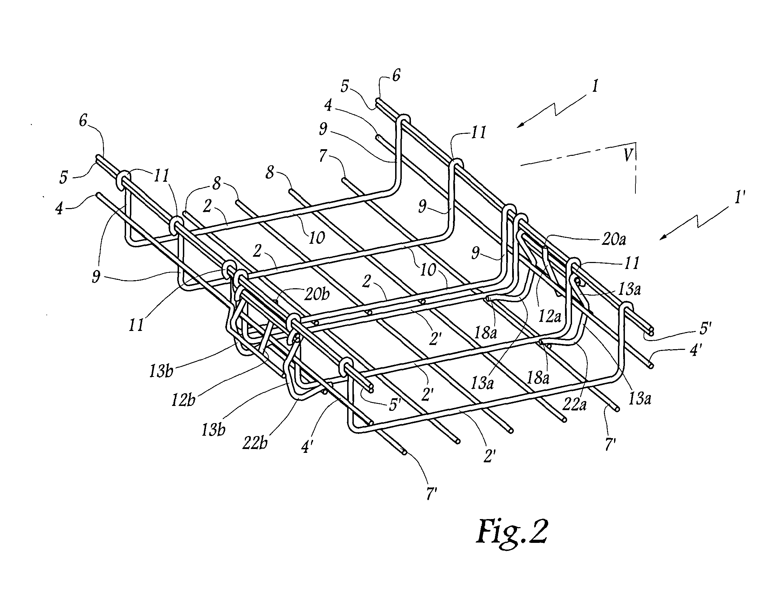

Sur les figures 1 et 2, il est partiellement représenté deux goulottes 1 et 1' constitutives d'un chemin pour câbles selon un premier mode de réalisation de l'invention. Ces deux goulottes 1 et 1' sont identiques, de sorte que seule celle référencée 1 est décrite dans ce qui suit. De plus, les références utilisées ci-après pour désigner des parties de la goulotte 1' sont obtenues en ajoutant un « ' » (prime) aux références repérant les mêmes parties sur la goulotte 1.

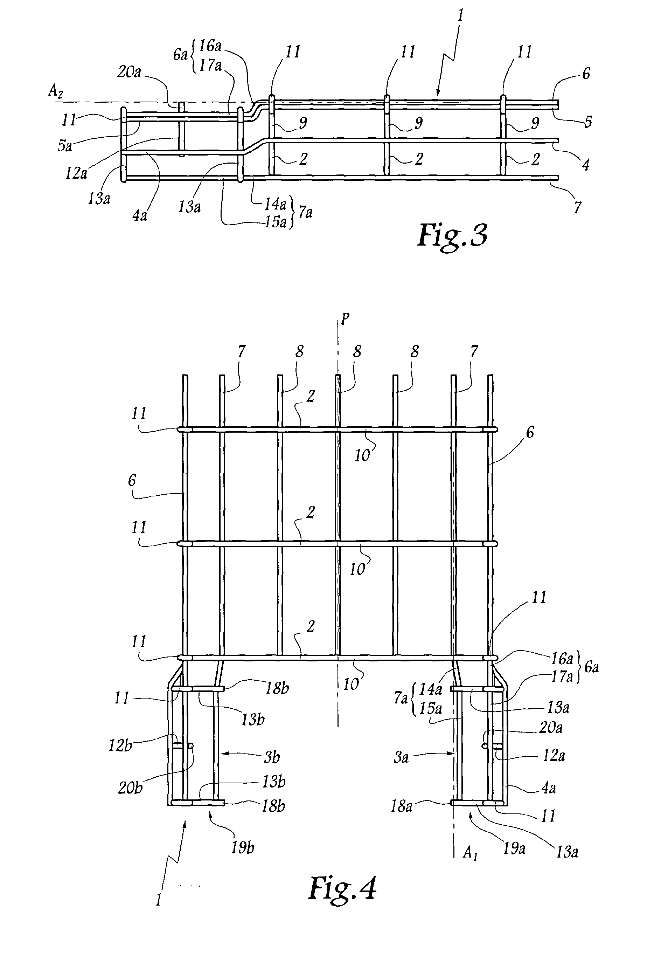

Cette goulotte 1, qui est représentée seule aux figures 3 et 4, est symétrique par rapport à un plan longitudinal et vertical P. Elle est constituée d'un treillis résultant du soudage de fils métalliques transversaux 2 à des fils métalliques longitudinaux, qui s'étendent d'une extrémité de la goulotte 1 à l'autre. Ce treillis de fils soudés ensemble définit un fond de la goulotte 1, deux côtés de cette goulotte 1, ainsi que deux pattes d'assemblage 3a et 3b qui s'étendent depuis une extrémité de la goulotte 1 de manière à être en regard l'une de l'autre.

Chaque côté de la goulotte 1 monte à partir du fond et comporte trois fils longitudinaux, dont le plus bas est référencé 4 et s'étend à distance des deux autres. Ces derniers, référencés 6 et 7, sont accolés.

La référence 7 désigne le fil longitudinal du fond qui est le plus proche d'un des côtés de la goulotte 1, ainsi que le fil longitudinal du fond qui est le plus proche de l'autre côté de la goulotte 1. Les autres fils longitudinaux du fond de la goulotte 1 sont référencés 8.

Chaque fil transversal 2 a globalement la forme d'un U et comprend deux tronçons 9 formant montant, ainsi qu'un tronçon 10 qui forme traverse et relie ces tronçons 9 l'un à l'autre. Ce tronçon 10 fait partie du fond de la goulotte 1, tandis que les tronçons 9 appartiennent respectivement aux côtés de cette goulotte 1. Chaque tronçon 9 se termine vers le haut par une boucle ouverte 11 qui entoure étroitement deux fils longitudinaux 5 et 6 accolés.

Les pattes latérales d'assemblage 3a et 3b sont symétriques par rapport au plan P, de sorte que seule celle référencée 3a est décrite en détail dans ce qui suit. En outre, les références utilisées ci-après pour désigner des parties de la patte latérale d'assemblage 3b sont construites en remplaçant par un b le a par lequel se termine les références repérant des parties semblables sur la patte 3a.

Ces pattes latérales d'assemblage 3a et 3b bordent une échancrure résultant du retrait d'une portion centrale du fond de la goulotte 1. Pour réaliser les pattes 3a et 3b, on commence par ce retrait. Ensuite, on met en forme chacune des deux portions latérales du treillis qui étaient attenantes à la portion centrale retirée. Enfin, on soude un fil 12a ou 12b sur chacune de ces deux portions latérales.

Il ressort de ce qui précède que la patte latérale d'assemblage 3a comporte des portions d'extrémité 4a, 5a, 6a et 7a des fils longitudinaux 4, 5, 6 et 7.

Le retrait de la portion centrale précitée du fond de la goulotte 1 a conduit à la suppression d'une partie des tronçons 10 de deux fils transversaux, dont les tronçons restant font partie des pattes latérales d'assemblage 3a et 3b. Ces tronçons restant constituent les fils transversaux référencés 13a sur la patte 3a.

La portion d'extrémité 7a comporte un tronçon coudé 14a et un tronçon rectiligne 15a qui s'étend parallèlement à la direction longitudinale de la goulotte 1, depuis l'un des fils 13a jusqu'à l'autre fil 13a. Le tronçon coudé 14a relie le tronçon rectiligne 15a au reste du fil longitudinal 7. A l'exception du tronçon d'extrémité 7a, ce fil longitudinal 7 s'étend selon un axe rectiligne A₁ dont le tronçon rectiligne 15 est décalé parallèlement au fond de la goulotte 1, c'est-à-dire horizontalement, d'une quantité égale au diamètre des fils longitudinaux 7.

La portion d'extrémité 6a comporte un tronçon coudé 16a et un tronçon rectiligne 17a, qui s'étend parallèlement à la direction longitudinale de la goulotte, depuis l'un des fils 13a jusqu'à l'autre fil 13a. Le tronçon coudé 16a relie le tronçon rectiligne 17a au reste du fil longitudinal 6. A l'exception du tronçon d'extrémité 6a, ce fil longitudinal 6 s'étend selon un axe rectiligne A₂, dont le tronçon rectiligne 17a est décalé parallèlement aux côtés de la goulotte 1, c'est-à-dire verticalement.

Chacun des fils 13a se termine par un doigt inférieur d'accrochage 18a, qui s'étend à partir de la portion d'extrémité 17a en direction de la patte latérale d'assemblage 3b. De plus, chacun des fils 13a comporte un tronçon courbe 22a entre les portions d'extrémité 6a et 7a. La portion d'extrémité 7a et les doigts d'accrochage 18a font partie d'un rebord inférieur 19a de la patte d'assemblage 3a.

Le fil 12a est soudé à la portion d'extrémité 4a et à la portion d'extrémité 6a, au-delà de laquelle il forme un doigt supérieur d'accrochage 20a dirigé vers le haut.

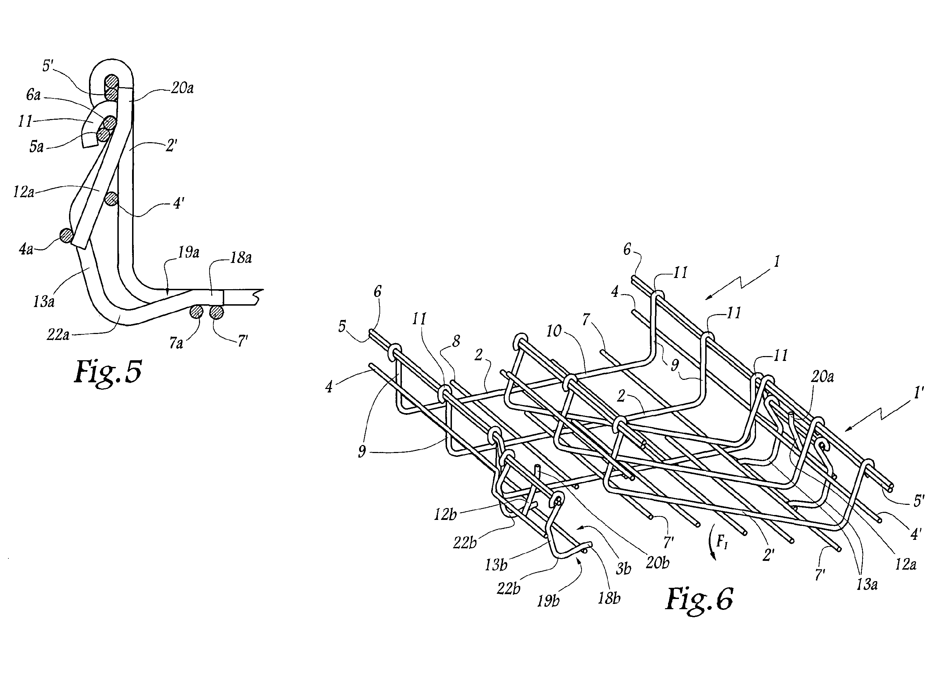

Pour assembler les goulottes 1 et 1', on commence par placer le fil 5' de la goulotte 1' derrière le doigt supérieur d'accrochage 20a, après quoi les goulottes 1 et 1' sont telles que représentées à la figure 6.

Ensuite, on fait basculer la goulotte 1' selon la flèche F₁, autour du fil 5' accroché au doigt 20a, jusqu'à ce que le fond de cette goulotte 1' rencontre les rebords inférieurs 19a et 19b.

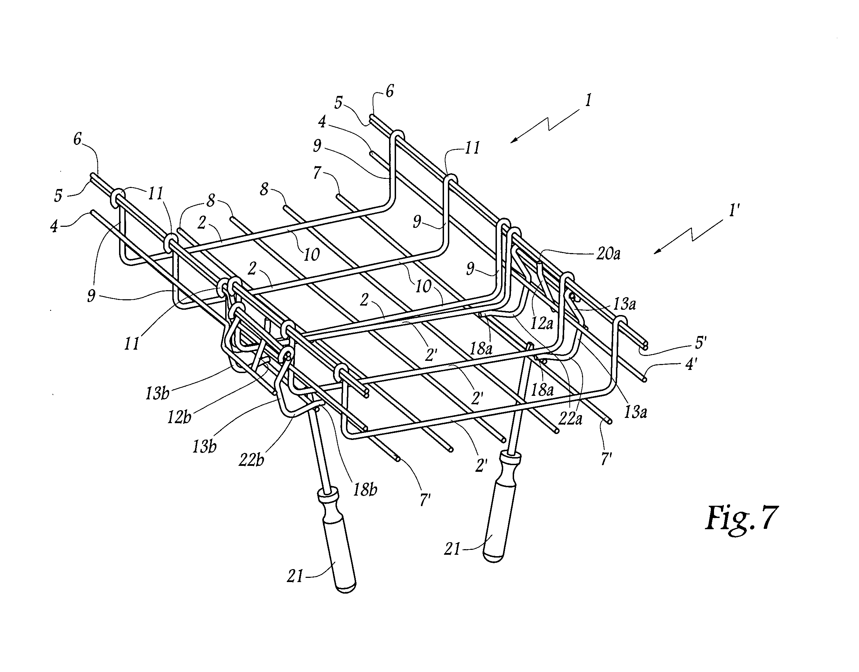

On insère alors un tournevis 21 entre un fil longitudinal 7' et le tronçon rectiligne 15a. Dans l'étape qui suit et qu'illustre la figure 7, on accroche les doigts inférieurs 18a à ce fil 7' en les faisant passer d'un côté de ce dernier à l'autre, à l'aide du tournevis 21 que l'on fait basculer à cet effet, de manière à l'utiliser comme un levier prenant appui sur le fil longitudinal 7'. Les tronçons courbes 22a sont configurés de manière à faciliter une déformation élastique des fils 13a lors de l'accrochage des doigts 18a.

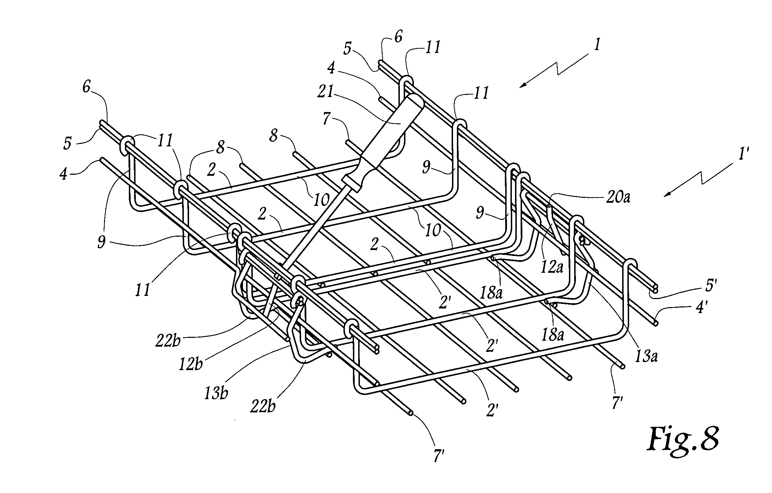

En opérant de la même manière, on fait passer les doigts inférieurs d'accrochage 18b d'un côté de l'autre fil 7' à l'autre, après quoi les goulottes 1 et 1' sont telles qu'illustrées à la figure 8. A nouveau, on utilise alors le tournevis 21 comme un levier, afin d'accrocher le doigt supérieur 20b à un fil longitudinal 5'. Lors de l'accrochage de ce doigt 20b, les fils 13b sont déformés élastiquement, ce que facilitent leurs tronçons courbes 22b. Après l'accrochage du doigt 20b, les goulottes 1 et 1' sont assemblées.

Il ressort de ce qui précède que l'assemblage des goulottes 1 et 1' est aisé à réaliser, ce qui est avantageux.

La figure 5 illustre la manière dont la patte latérale d'assemblage 3a est accrochée à la goulotte 1', lorsque cette dernière et la goulotte 1 sont assemblées. Le contact entre le doigt d'accrochage 20a et le fil longitudinal 5', d'une part, et les contacts entre la portion d'extrémité 6a et deux fils transversaux 2', d'autre part, font que la patte latérale d'assemblage 3a et le côté de la goulotte 1' sur lequel elle est montée ne peuvent pas être écartés l'un de l'autre. Les contacts entre la portion d'extrémité 7a et les deux fils transversaux 2' précités, d'une part, et les contacts entre un fil longitudinal 7' et les doigts d'accrochage 18a, d'autre part, font que le rebord inférieur 19a et le fond de la goulotte 1' ne peuvent pas être écartés l'un de l'autre. La transmission des efforts de l'une des goulottes 1 et 1' à l'autre est encore améliorée par la présence d'un contact entre un fil longitudinal 4' et le fil 12a, ainsi que par des contacts entre le fil longitudinal 5' et les boucles 11 par lesquelles les fils 13a se terminent à l'opposé des doigts d'accrochage 18a.

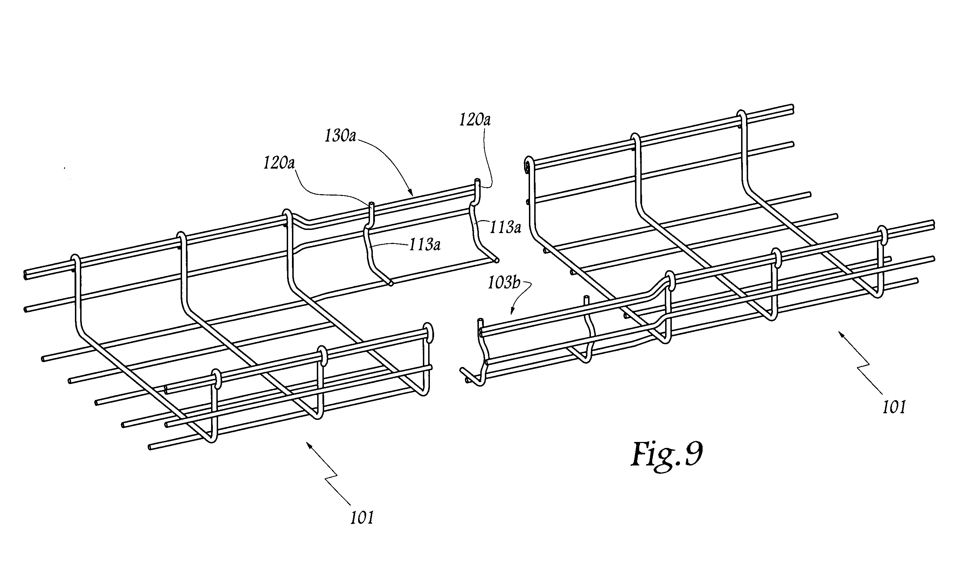

Sur la figure 9, il est partiellement représenté deux goulottes identiques 101 constitutives d'un chemin pour câbles selon un deuxième mode de réalisation de l'invention.

Dans ce qui suit, on ne décrit que ce qui distingue une goulotte 101 de la goulotte 1. De plus, une référence utilisée ci-après pour désigner une partie d'une goulotte 101 semblable ou équivalente à une partie de la goulotte 1 est obtenue en augmentant de 100 la référence repérant cette partie sur une goulotte 1.

L'une et l'autre patte latérales d'assemblage 103a et 103b d'une goulotte 101 sont respectivement disposées à l'une et l'autre extrémité de cette goulotte 101. Elles peuvent toutes deux prolonger ou non le même côté de la goulotte 1. Au niveau de la patte latérale d'assemblage 103a, le fil rapporté 12a est supprimé puisque plusieurs doigts d'accrochage 120a sont définis par les fils 113a. Il en est de même au niveau de la patte d'assemblage 103b.

La manière d'opérer pour assembler deux goulottes 101 à l'aide d'un tournevis se déduit aisément de la description, faite précédemment, de la manière d'opérer pour assembler les goulottes 1 et 1'.

Aucune pièce autre que les goulottes 1 et 1' n'est nécessaire pour l'assemblage de ces goulottes 1 et 1'. Cela vaut également pour les goulottes 101 et se traduit par une diminution du nombre de pièces nécessaires pour installer un chemin pour câbles. Il s'ensuit une simplification du stockage et du transport de ces pièces, conformément au but de l'invention. Cela revêt un intérêt pratique et conduit en outre à une réduction du coût global du chemin pour câbles.

On notera que les pattes latérales d'assemblage 3a, 3b, 103a et 103b présentent l'avantage d'être d'une grande robustesse. Elles présentent en outre l'avantage d'être aisées à fabriquer, ce qui se traduit par un prix de revient faible.

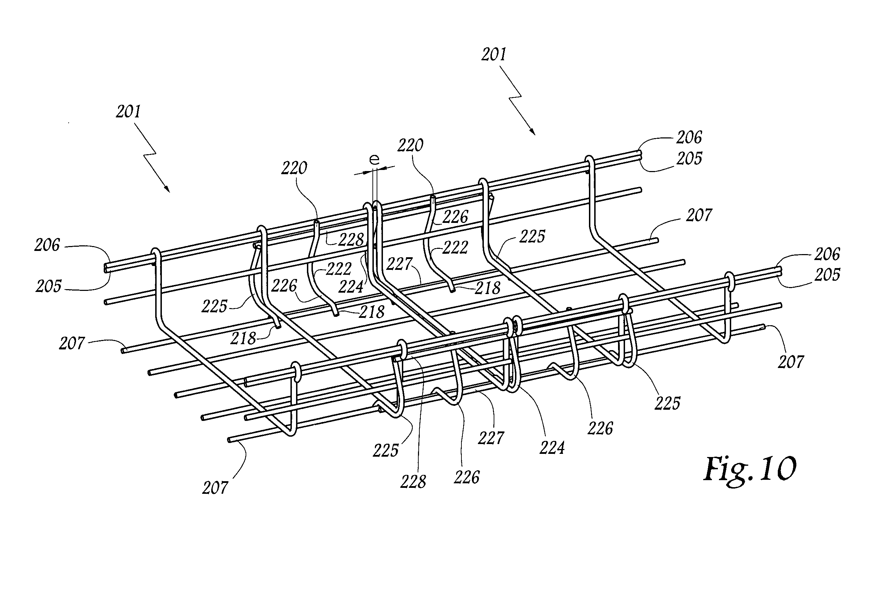

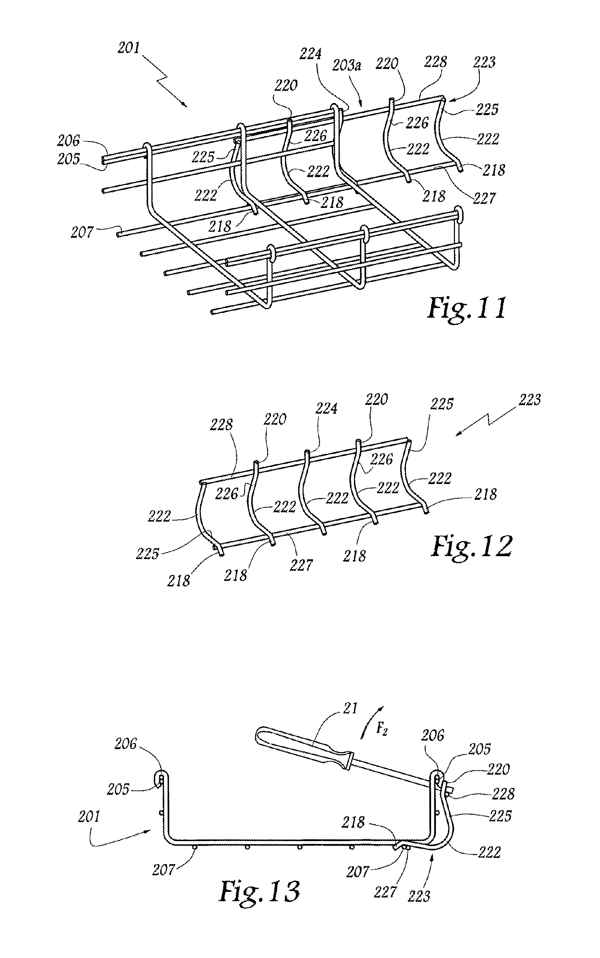

Sur la figure 10 est partiellement représenté un chemin pour câbles selon un troisième mode de réalisation de l'invention. Ce chemin pour câbles comporte deux goulottes identiques 201 et 201' mises bout à bout, dont une est représentée seule à la figure 11.

Dans ce qui suit, on ne décrira que ce qui distingue la goulotte 201 représentée à la figure 11 de la goulotte 1. De plus, une référence utilisée pour désigner ci-après une partie de cette goulotte 201 semblable ou équivalente à une partie de la goulotte 1 est obtenue en augmentant de 200 la référence repérant cette partie sur la goulotte 1.

Chacune des deux extrémités d'une goulotte 201 est munie de l'une des deux pattes latérales d'assemblage, qui sont identiques et dont une seule, référencée 203a, est visible à la figure 11 et décrite ci-après. Cette patte 203a est rapportée sur la goulotte 201. Plus précisément, il s'agit d'une portion d'extrémité d'une éclisse d'assemblage 223 montée sur la goulotte 201.

Cette éclisse 223, qui est représentée seule à la figure 12, est constituée d'un treillis résultant du soudage de fils métalliques transversaux 224, 225 et 226 à un fil métallique longitudinal inférieur 227 et à un fil métallique longitudinal supérieur 228.

Le fil transversal 224 est un fil médian s'étendant sensiblement à égale distance des deux extrémités de l'éclisse 223. Chacun des fils transversaux 225, au nombre de deux, est placé à une extrémité de l'éclisse 223, dont il définit un bord. Chacun des fils transversaux 226, également au nombre de deux, est disposé entre le fil transversal médian 224 et l'un des fils transversaux 225.

Une portion d'extrémité de chaque fil 226 dépasse vers le haut du fil longitudinal supérieur 228 et forme un doigt d'accrochage supérieur 220.

Chacun des fils 225 et 226 comporte une portion d'extrémité qui dépasse du fil longitudinal inférieur 227 et forme un doigt inférieur d'accrochage 218.

Chacun des fils transversaux 224, 225 et 226 comporte un tronçon courbe 222 entre les fils longitudinaux 227 et 228, ce qui facilite sa déformation élastique lors de l'accrochage, décrit ci-après, des doigts 218 et 220.

L'installation de l'éclisse 223 sur la goulotte 201 comporte deux étapes, dont la première consiste à accrocher deux doigts inférieurs 218, situés d'un même côté du fil médian 224, à un fil longitudinal 207 du fond de la goulotte 201. La deuxième étape de l'installation de l'éclisse 223 sur la goulotte 201 est illustrée par la figure 13 et consiste à accrocher l'un des doigts supérieurs 220 aux fils 205 et 206 d'un côté de la goulotte 201. A cet effet, on utilise comme un levier un tournevis 21, que l'on fait basculer sur le fil 205 précité, dans le sens indiqué par la flèche F₂, afin d'appuyer sur le fil 228 de l'éclisse 223.

Comme on peut le voir à la figure 11, la patte 203a possède un doigt supérieur d'accrochage équivalent au doigt 20a ou 120a et constitué par un doigt 220. Elle possède également deux doigts inférieurs d'accrochage équivalents aux doigts 18a et constitués par deux doigts 218.

Pour assembler deux goulottes 201 munies d'éclisses 223, on procède comme pour assembler les goulottes 1 et 1' ou comme pour assembler deux goulottes 101, selon les positions relatives des éclisses 223 sur les goulottes 201 à assembler.

Cela ayant été fait, les deux goulottes 201 sont telles qu'illustrées à la figure 10 et sont maintenues assemblées par les deux éclisses latérales 223. Chacune de ces deux éclisses 223 est accrochée aux deux goulottes 201 de telle manière que son fil médian 224 se trouve entre ces goulottes 201. Ainsi disposés, les fils médians 224 remplissent donc la fonction d'entretoises maintenant un écart e entre les goulottes 201.

L'assemblage de deux goulottes 201 à l'aide de deux éclisses 223 peut avoir lieu seulement après que l'une au moins de ces éclisses 223 a été installée sur l'une des goulottes 201. Il s'ensuit que les éclisses 223 peuvent être prémontées sur les goulottes 201. Lorsque tel est le cas, la gestion du transport et du stockage des éclisses 223 est superflue puisqu'elle résulte de la gestion du transport et du stockage des goulottes 201 que ces éclisses équipent. Les éclisses 223 permettent donc d'atteindre le but mentionné dans l'introduction du présent texte.

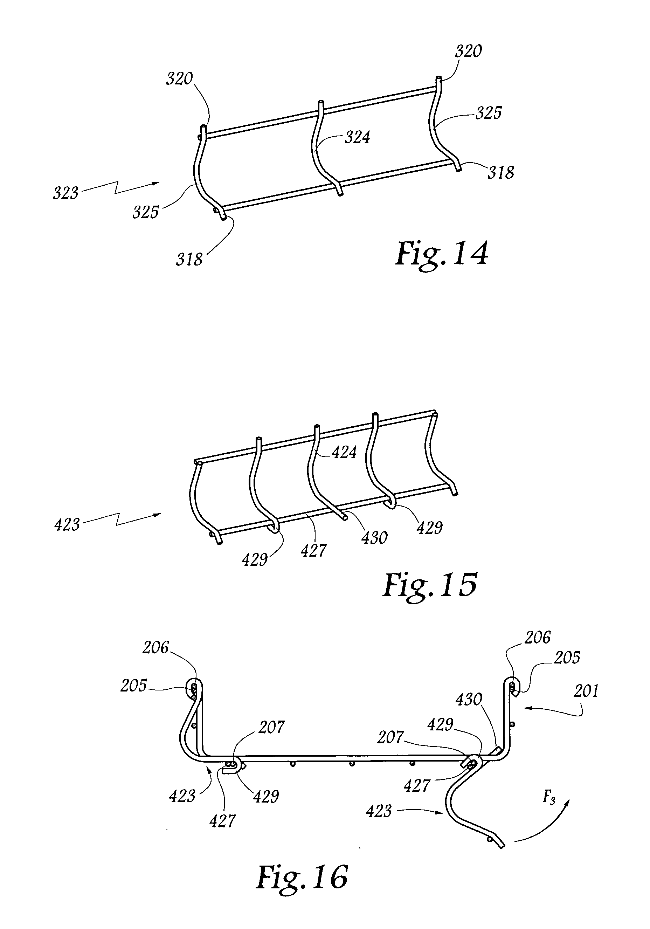

Sur la figure 14 est représentée une éclisse 323 selon un quatrième mode de réalisation de l'invention. Cette éclisse 323 se distingue de l'éclisse 223 en ce qu'elle comporte non pas cinq fils transversaux 224, 225 et 226, mais seulement trois fils transversaux 324 et 325, dont chacun à la même forme qu'un fil 226. Le fil 324 est un fil médian comme le fil 224. Chacun des deux fils 325 est placé à une extrémité de l'éclisse 323 et définit un doigt inférieur d'accrochage 318, semblable à l'un des doigts 218, ainsi qu'un doigt supérieur d'accrochage 320, semblable à l'un des doigts 220. Pour le reste, l'éclisse 323 est identique à l'éclisse 223.

Sur la figure 15 est représentée une éclisse 423 selon un cinquième mode de réalisation de l'invention. Cette éclisse 423 est identique à l'éclisse 223, sauf en ce que deux de ses doigts inférieurs d'accrochage sont recourbés et forment des crochets 429, et en ce que son fil médian, référencé 424, définit un doigt inférieur 430 de positionnement longitudinal de l'éclisse 423 par rapport aux deux goulottes destinées à être assemblées par cette éclisse. Les deux crochets 429 sont disposés de part et d'autre du fil médian 424 et entourent partiellement le fil longitudinal inférieur, référencé 427, de l'éclisse 423.

Sur la figure 16 sont représentées une première goulotte 201 et deux éclisses 423, dont une maintient assemblés un côté de la première goulotte 201 et un côté d'une deuxième goulotte 201 masquée par cette première goulotte. L'un et l'autre crochet 429 de l'autre éclisse 423, qui est en cours d'installation, sont respectivement accrochés à un fil longitudinal 207 du fond de la première goulotte 201 et à un fil longitudinal 207 du fond de la deuxième goulotte 201. Ainsi accrochée, cette autre éclisse 423 peut être basculée vers le haut (flèche F₃), afin d'achever son installation par l'accrochage de ses doigts supérieurs d'accrochage, référencés 420, à des fils 205 et 206 des première et deuxième goulotte 201.

On notera que l'assemblage des goulottes 1 et 1', des goulottes 101 et 101' ou des goulottes 201 à l'aide des pattes 3a et 3b ou des pattes 103a et 103b ou des éclisses 223, 323 ou 423 est solide et stable, ce qui est avantageux.

Parmi les avantages de l'invention, on notera que les pattes 3a, 3b, 103a, et 103b, ainsi que les éclisses 223, 323 et 423, ont un aspect qui se marie avec celui des goulottes 1, 1', 101, 101' et 201, puisque tous ces éléments sont en treillis de fils soudés ensemble.

## Revendications

1. Goulotte pour chemin pour câbles, cette goulotte comprenant des fils longitudinaux (4, 5, 6, 7, 8 ; 205, 206, 207) et transversaux (2 ; 202) métalliques soudés en un treillis qui définit un fond de la goulotte, ainsi que des premier et deuxième côtés montant à partir de ce fond, **caractérisée en ce qu'**elle est pourvue d'au moins une patte latérale d'assemblage (3a, 3b ; 103a, 103b ; 203a) en treillis de fils métalliques soudés ensemble, cette patte d'assemblage (3a, 3b ; 103a, 103b ; 203a) dépassant d'une extrémité de la goulotte pour pouvoir être solidarisée à une autre goulotte.

2. Goulotte selon la revendication 1, **caractérisée en ce que** des portions d'extrémité (4a, 5a, 6a, 7a) de certains des fils longitudinaux (4, 5, 6, 7, 8) de la goulotte font partie de la patte latérale d'assemblage (3a, 3b ; 103a, 103b).

3. Goulotte selon la revendication 1, **caractérisée en ce que** la patte latérale d'assemblage (203a) est rapportée.

4. Goulotte selon la revendication 3, **caractérisée en ce que** la patte latérale d'assemblage fait partie d'une éclisse latérale (223 ; 323 ; 423) montée sur la goulotte.

5. Goulotte selon l'une quelconque des revendications précédentes, **caractérisée en ce que** la patte d'assemblage (3a, 3b ; 103a, 103b ; 203a) comprend au moins deux doigts inférieur et supérieur (18a, 18b, 20a, 20b ; 120a ; 218, 220 ; 318, 320 ; 429) d'accrochage de la patte à l'autre goulotte.

6. Goulotte selon la revendication 5, **caractérisée en ce que** le doigt inférieur d'accrochage (18a, 18b ; 218 ; 318 ; 429) et le doigt supérieur d'accrochage (20a, 20b ; 120a ; 220 ; 320) sont respectivement fixés à un premier (7a ; 227 ; 427) et un deuxième fil (6a ; 228) longitudinaux parmi les fils du treillis de la patte d'assemblage, au moins un fil transversal (13a, 13b ; 113a ; 223, 224, 225 ; 323, 324, 325 ; 423, 424) parmi les fils du treillis de la patte d'assemblage reliant le premier fil longitudinal au deuxième fil longitudinal et comprenant au moins un tronçon courbe (22a, 22b ; 222) entre ces premier et deuxième fils longitudinaux.

7. Goulotte selon la revendication 6, **caractérisée en ce que** l'un au moins des doigts inférieur et supérieur d'accrochage est une portion d'extrémité du fil transversal du treillis de la patte.

8. Goulotte selon les revendications 2 et 6, **caractérisée en ce que** le premier (7) et le deuxième fil (6) longitudinaux comprennent respectivement une première (7a) et une deuxième portion d'extrémité (6a) parmi lesdites portions d'extrémité de la patte d'assemblage, ledit premier fil longitudinal (7) comprenant une portion qui fait partie du fond de la goulotte, qui s'étend selon un premier axe (A₁) sensiblement parallèle aux côtés de la goulotte et qu'un premier tronçon (14a) de la première portion d'extrémité (7a) relie à un deuxième tronçon (15a) de cette première portion d'extrémité (7a), ce deuxième tronçon (15a) de la première portion d'extrémité (7a) étant décalé du premier axe (A₁) parallèlement au fond de la goulotte et étant sensiblement parallèle à ce premier axe (A₁), ledit deuxième fil longitudinal (6) comprenant une portion qui fait partie du premier côté de la goulotte, qui s'étend selon un deuxième axe (A₂) sensiblement parallèle au fond de la goulotte et qu'un premier tronçon (16a) de la deuxième portion d'extrémité (6a) relie à un deuxième tronçon (17a) de cette deuxième portion d'extrémité (6a), ce deuxième tronçon (17a) de la deuxième portion d'extrémité (6a) étant décalé du deuxième axe (A₂) parallèlement au premier côté de la goulotte et étant sensiblement parallèle à ce deuxième axe (A₂).

9. Goulotte selon l'une quelconque des revendications précédentes, **caractérisée en ce que** ladite patte d'assemblage (3a, 3b ; 103a, ; 103b ; 203a) comporte un rebord inférieur (19a, 19b) de support de l'autre goulotte.

10. Eclisse latérale destinée à équiper une goulotte selon les revendications 4 et 6, **caractérisée en ce qu'**elle comprend un treillis de fils métalliques soudés ensemble, au moins deux premiers doigts inférieur et supérieur (218, 220 ; 318, 320 ; 429) d'accrochage de l'éclisse à une première goulotte, ainsi qu'au moins deux deuxièmes doigts inférieur et supérieur (218, 220 ; 318, 320 ; 429) d'accrochage de l'éclisse à une deuxième goulotte, les premier et deuxième doigts inférieurs d'accrochage (218 ; 318 ; 429) étant fixés à l'écart l'un de l'autre à un premier fil longitudinal (227 ; 427) parmi les fils du treillis de l'éclisse, les premier et deuxième doigts supérieurs d'accrochage (220 ; 320) étant fixés à l'écart l'un de l'autre à un deuxième fil longitudinal (228) parmi les fils du treillis de l'éclisse, alors que certains fils transversaux (224, 225, 226 ; 324, 325 ; 424) parmi les fils du treillis de l'éclisse relient le premier fil longitudinal au deuxième fil longitudinal et comprennent au moins un tronçon courbe (222) entre ces premier et deuxième fils longitudinaux.

11. Eclisse selon la revendication 10, **caractérisée en ce que** l'un au moins des premier et deuxième doigts inférieurs et supérieurs d'accrochage (218, 220 ; 318, 320 ; 429) est une portion d'extrémité d'un desdits fils transversaux (226 ; 325 ; 424) du treillis de l'éclisse (223 ; 323 ; 423).

12. Eclisse selon la revendication 10 ou 11, **caractérisée en ce que** les premier et deuxième doigts inférieurs sont recourbés et forment des crochets (429) entourant partiellement le premier fil longitudinal (427) du treillis de l'éclisse.

13. Chemin pour câbles, comprenant une première goulotte (1' ; 101 ; 201) comportant des fils longitudinaux (4', 5', 7' ; 205, 206, 207) et transversaux (2' ; 202) métalliques soudés en un treillis qui définit un fond de cette première goulotte, ainsi que deux côtés montant à partir de ce fond, un premier (7' ; 207) et un deuxième fil (5' ; 205) longitudinaux parmi les fils longitudinaux de la première goulotte faisant respectivement partie du fond de cette première goulotte et d'un côté de ladite première goulotte, **caractérisé en ce qu'**il comprend une deuxième goulotte (1 ; 101 ; 201) selon l'une quelconque des revendications 5 à 8, le doigt inférieur (18a, 18b ; 218 ; 318 ; 429) et le doigt supérieur (20a, 20b ; 120a ; 220 ; 320) étant respectivement accrochés au premier (7' ; 207) et au deuxième fil (5' ; 205) longitudinaux de la première goulotte.

14. Chemin selon la revendication 13, **caractérisé en ce que** la deuxième goulotte (1 ; 101 ; 201) est selon la revendication 6, le premier fil longitudinal (7a ; 227 ; 427) de la patte d'assemblage et le premier fil longitudinal (7' ; 207) de la première goulotte (1' ; 101 ; 201) étant d'un même côté d'un premier fil transversal (2' ; 202) parmi les fils transversaux de la première goulotte, le doigt inférieur d'accrochage (18a, 18b ; 218 ; 318 ; 429) et le premier fil transversal (2' ; 202) de la première goulotte étant d'un même côté du premier fil longitudinal (7' ; 207) de la première goulotte, le deuxième fil longitudinal (6a ; 228) de la patte d'assemblage et le deuxième fil longitudinal (5' ; 205) de la première goulotte étant d'un même côté du premier fil transversal (2' ; 202) de la première goulotte, le doigt supérieur d'accrochage (20a, 20b ; 120a ; 220 ; 320) et le premier fil transversal (2' ; 202) de la première goulotte étant d'un même côté du deuxième fil longitudinal (5' ; 205) de la première goulotte.

15. Procédé de fabrication d'une goulotte (1, 1' ; 101) selon la revendication 2 ou 8, **caractérisé en ce qu'**il comporte des étapes dans lesquelles :
a) au moins à une extrémité d'une goulotte initiale comprenant des fils longitudinaux et transversaux soudés en un treillis qui définit un fond de la goulotte initiale, ainsi que deux côtés montant à partir de ce fond, on découpe et on retire une portion du treillis de cette goulotte initiale de telle manière qu'au moins une portion latérale attenante à la portion que l'on retire demeure associée au reste de la goulotte initiale, puis
b) on réalise ladite patte latérale d'assemblage (3a, 3b ; 103a, 103b) à partir de la portion latérale qui était attenante à la portion retirée dans l'étape a).
